Europäisches Patentamt

European Patent Office

Office européen des brevets

(11) Veröffentlichungsnummer: **0 270 993 B1**

(12) **EUROPÄISCHE PATENTSCHRIFT**

(45) Veröffentlichungstag der Patentschrift: 26.06.91

(51) Int. Cl.⁵: **F24D 19/10,** F24D 17/00, F24H 1/18, C02F 1/02

(21) Anmeldenummer: 87117856.2

(22) Anmeldetag: 03.12.87

(54) Verfahren zur Verhinderung des Erhaltes und der Vermehrung von schädlichen Keimen eines in einem aufheizbaren System befindlichen Brauchwasservolumens und Einrichtungen zu deren Durchführung.

(30) Priorität: 06.12.86 DE 3641726

(43) Veröffentlichungstag der Anmeldung: 15.06.88 Patentblatt 88/24

(45) Bekanntmachung des Hinweises auf die Patenterteilung: 26.06.91 Patentblatt 91/26

(84) Benannte Vertragsstaaten: AT BE CH DE FR IT LI NL

(56) Entgegenhaltungen:
DE-A- 2 460 067
FR-A- 2 270 528

ZIEKENHUISHYGIENE EN INFEKTIEPREVEN-TIE, Mai 1984, Seiten 103-106; D. VAN DER KOOIJ et al.: "Legionella pneumophila in warmtapwaterinstallaties"

(73) Patentinhaber: Viessmann Werke GmbH & Co.
Postfach 10 Viessmannstrasse
W-3559 Allendorf (Eder)(DE)

(72) Erfinder: Viessmann, Hans, Dr.
Im Hain
W-3559 Battenberg/Eder(DE)

(74) Vertreter: Wolf, Günter, Dipl.Ing.
Patentanwälte Dipl.-Ing. Amthor Dipl.-Ing.
Wolf Postfach 70 02 45 An der Mainbrücke 16
W-6450 Hanau 7(DE)

## Beschreibung

Die Erfindung betrifft Verfahren zur Verhinderung des Erhaltes und der Vermehrung von schädlichen Keimen eines in einem aufheizbaren System befindlichen Brauchwasservolumens und Einrichtungen zu deren Durchführung.

Bei der Brauchwasserbereitstellung wurde inzwischen festgestellt, daß der "Kaltwasserteil" Speicher enthaltender Systeme ein besonders günstiges "Klima" für die Erhaltung und die Vermehrung von schädlichen Keimen, insbesondere sogenannter Legionellen aufweist, da in der Regel im "Kaltwasserbereich" die dort herrschenden Wassertemperaturen (bis 40˚C, in der Regel aber darunter) besonders günstige Bedingungen darstellen. (vgl. "Ziekenhuishygiene en Infektiepreventie, Mai 1984, Seiten 103-106). Dieser "keimgünstige" Temperaturzustand im "Kaltwasserbereich bleibt aber in Rücksicht auf die bisherige Bauweise der Speicher, die Art der Kaltwasserzufuhr und der Warmwasserabfuhr und die Art der Anordnung der Brauchwasseraufwärmeinrichtungen praktisch immer erhalten, da eine Warmwasserentnahme immer mit einer Kaltwasserzufuhr von unten verbunden ist und sich die Anteile von warmem Wasser mit höherer Temperatur immer nach oben aus dem Kaltwasserbereich herausbewegen. Diese Gegebenheit führt natürlich außerdem dazu, daß immer nur eine Teilmenge des im System aufgewärmten Volumens die gewünschte Temperatur hat, d.h., es steht für Gebrauchszwecke praktisch nie das Gesamtwasservolumen mit einer gleichen Temperatur zur Verfügung, was sich natürlich insbesondere bei Entnahme des Gesamtvolumens durch abfallende Temperaturen des Bruchwassers bemerkbar macht. In etwa gleiches gilt auch für sogenannte Brauchwasserzirkulationsysteme, die aus einem Brauchwassererwärmer mit zu den Zapfstellen und zurückführender, eine Zirkulationspumpe enthaltender Zirkulationsleitung bestehen.

Der Erfindung liegt demgemäß die Aufgabe zugrunde, Verfahren und zu deren Durchführung geeignete Einrichtungen zu schaffen, mit denen der Erhaltung und Vermehrung von im Brauchwasser enthaltenen Keimen durch "thermische Desinfektion" entgegengewirkt werden und außerdem die Zirkulation das Brauchwasser in derartigen Brauchwassersystemen verbessert werden kann.

Diese Aufgabe ist nach der Erfindung mit einem Verfahren gemäß Kennzeichen des Anspruches 1 gelöst. Für Brauchwasserzirkulationssysteme ergibt sich die Lösung der gleichen Aufgabe gemäß Kennzeichen des Anspruches 12. Die zur Durchführung der Verfahren vorgesehenen Einrichtungen in Form von Brauchwasserspeichern sind in den Ansprüchen 2 bis 11 und in Form einer Brauchwasserzirkulationsanlage im Anspruch 13 erfaßt.

Die erfindungsgemäßen Verfahren und die Einrichtungen ˙ zu deren Durchführung haben also nichts direkt mit der eigentlichen Brauchwassererwärmung zu tun, sondern beziehen sich auf eine periodische, gewissermaßen als "Nachheizung" zu bezeichnende Brauchwassererwärmung und zwar nur jeweils bis auf ein keimwidriges Temperaturniveau, wobei natürlich Voraussetzung ist, daß im ganzen System ein ausreichendes Wärmepotential verfügbar sein muß, um die "Nachheizung" periodisch und wirksam durchführen zu können.

Die erfindungsgemäßen Verfahren und die Einrichtungen zu ihrer Durchführung werden nachfolgend anhand der zeichnerischen Darstellung von Ausführungsbeispielen näher erläutert.

Es zeigt schematisch

Fig. 1    einen Schnitt durch einen Brauchwasserspeicher mit Innenheizer und den Einrichtungen für eine "innere" Zirkulation;

Fig. 2    einen Teilschnitt für eine andere Ausführungsform des Speichers gemäß Fig. 1;

Fig. 3    einen Schnitt durch das Ende des in dem Kaltbereich reichenden Rohres;

Fig. 4    einen Schnitt durch einen Brauchwasserspeicher mit Innenheizer und Anordnung der Umwälzpumpe im Zuge eines Bypasses;

Fig. 5    im Schnitt einen horizontal angeordneten Brauchwasserspeicher mit Bypassanordnung der Umwälzpumpe im Sinne der Fig. 3;

Fig. 6    im Schnitt einen Brauchwasserspeicher mit Außenheizer;

Fig. 7    einen Brauchwasserspeicher mit Außenheizer in anderer Ausführungsform;

Fig. 8    im Schnitt einen Brauchwasserspeicher in Form eines Ladesystems und

Fig. 9    eine Brauchwasserzirkulationsanlage.

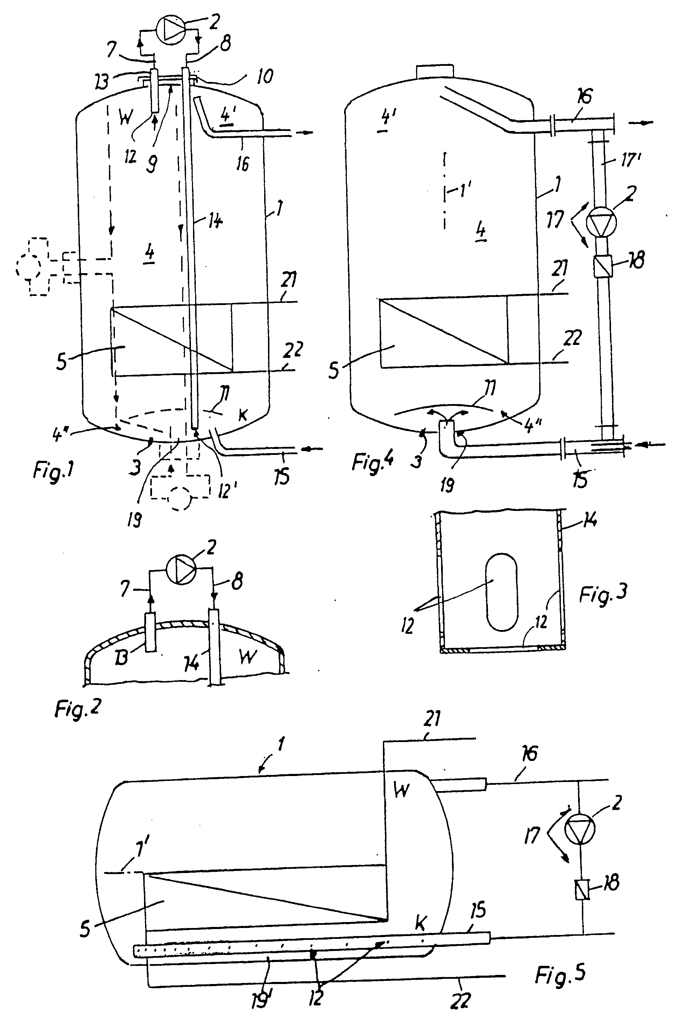

Der Brauchwasserspeicher ist bei der Ausführungsform nach Fig. 1, 2 grundsätzlich derart ausgebildet, daß zwischen dem Warmwasserteil W und dem Kaltwasserteil K des Behälters 1 eine Zirkulationspumpe 2 angeordnet ist, an deren Saug- und Druckstutzen 7, 8 Leitungsstücke 13, 14 sitzen, welche einerseits im Warmwasserteil W und andererseits an der Tiefststelle 19 des Kaltwasserteiles K enden, wobei die Zirkulationspumpe 2 von einem im Kaltwasserteil K angeordneten Thermofühler 3 steuerbar ausgebildet ist. Diese Steuerung bedarf keiner näheren Erläuterung, da dafür ohne weiteres bekannte Elemente und Schaltprinzipien zur Verfügung stehen. Maßgebend ist dabei nur, daß bei Absinken der Temperatur im Kaltwasserbereich K unter einem "keimkritischen" Bereich die Zirkulationspumpe 2 eingeschaltet wird und solange läuft, bis die Temperatur im Kaltwasserteil K wieder über dem "keimkritischen", d.h. keimabtötenden Bereich liegt. Die Kaltwasserzufuhr erfolgt durch das Kaltwasserzufuhrrohr 15, sobald durch das Warmwasserabfuhrrohr 16 Warmwasser abgezogen wird. Die dafür erforderlichen Ventile sind ebenfalls nicht dargestellt, da es sich hierbei um bekannte Elemente und funktionelle Abhängigkeiten handelt.

Die dargestellte Ausführungsform des Brauchwasserspeichers nach Fig. 1 ist besonders für eine Nachrüstung bereits installierter Brauchwasserspeicher geeignet, da hierbei lediglich der Öffnungsverschluß 10 einer Speicheröffnung 9 durch einen anderen Deckel zu ersetzen ist, an der sich die Umwälzpumpe 2 mit ihren Saug- und Druckstutzen 7, 8 befindet. Sofern sich, wie dargestellt, die Öffnung 9 am oberen Boden des Behälters 1 befindet, ist das Leitungsstück 13 am Saugstutzen 7 entsprechend kurz und das Leitungsstück 14 am Druckstutzen 8 entsprechend lang gehalten, so daß dieses bis in den Kaltwasserteil K des Speichers reicht. Dort kann vorteilhaft im Bereich über der Ausströmöffnung 12 am Leitungsstück 14 eine sogenannte Aufströmblende 11 vorgesehen werden, die das dort zuströmende Warmwasser besser über den ganzen Bodenbereich des Behälters 1 verteilt. Zweckmäßig ist diese Ausströmblende 11, wie dargestellt, schirmartig nach oben durchgewölbt. Das Ausströmende des Leitungsstückes 14 ist in Fig. 3 verdeutlicht.

Für die Verwirklichung dieses Prinzipes spielt es letztlich keine Rolle, wo sich die Speicheröffnung 9 am Behälter 1 befindet, wie dies gestrichelt angedeutet ist, d.h., diese Speicheröffnungen 9 können sich auch seitlich (siehe Fg.1) oder unten am Behälter 1 befinden, wobei dann lediglich die Leitungsstücke 13, 14 entsprechend in den Warmwasserteil W und den Kaltwasserteil K zu führen sind. Der Innenheizer ist mit 5 bezeichnet, bei dem es sich hier bspw. um einen Durchlaufwärmetauscher handelt.

Selbstverständlich ist es gemäß Fig. 2 auch möglich, für die Einführung der Leitungsstücke 13, 14 entsprechende Öffnungen in die Wand des Behälters 1 zu schneiden, die Leitungsstücke 13, 14 einzuführen und den Durchgriffsbereich in geeigneter Weise flüssigkeitsdicht zu machen, wenn man für die Einführung der Leitungsstücke 13, 14 nicht den Öffnungsverschluß 10 benutzen will.

Bei den Ausführungsformen gemäß Fig. 4, 5 handelt es sich um Speicher ebenfalls mit Innenheizer 5, wobei die Zirkulationspumpe 2 in einen Bypass 17 zwischen dem Warmwasserabfuhrrohr 16 und dem Kaltwasserzufuhrrohr 15 eingebunden ist. Bei Bedarf und entsprechender Reaktion des Thermofühlers 3 wird die Zirkulationspumpe 2 eingeschaltet, die dann gemäß vorbeschriebenem Prinzip Warmwasser aus dem Warmwasserteil W in den Kaltwasserteil K pumpt, welcher Vorgang selbstverständlich nichts mit einer Warmwasserentnahme bzw. gleichzeitiger Kaltwasserzufuhr zu tun hat. Auch hierbei ist auf die Darstellung erforderlicher Ventile oder besonderer Einleiteinrichtungen für das Warmwasser in das Kaltwasserzufuhrrohr 15 verzichtet, da derartige Elemente und Anordnungen hinlänglich bekannt sind. Zum Innenheizer 5 führen Heizmediumsvor- und -rückläufe 21, 22.

Dieses Prinzip einer "Bypass-Umwälzung" ist auch ohne weiteres gemäß Fig. 5 bei einem horizontal angeordneten Behälter 1 möglich, wobei die Ausbildung vorteilhaft und zweckmäßig derart erfolgt, daß der im Tiefstbereich 19' des Behälters 1 angeordnete Kaltwasserzufuhrteil des Kaltwasserzufuhrrohres 15 über die ganze Länge des Tiefstbereiches 19' erstreckt und mit mehreren über die ganze Länge verteilten Öffnungen 12 versehen ist, die gegen die untere Innenwand des Behälters 1 gerichtet sind. Mit 18 ist eine Rückstromsperre im Bypass 17 bezeichnet.

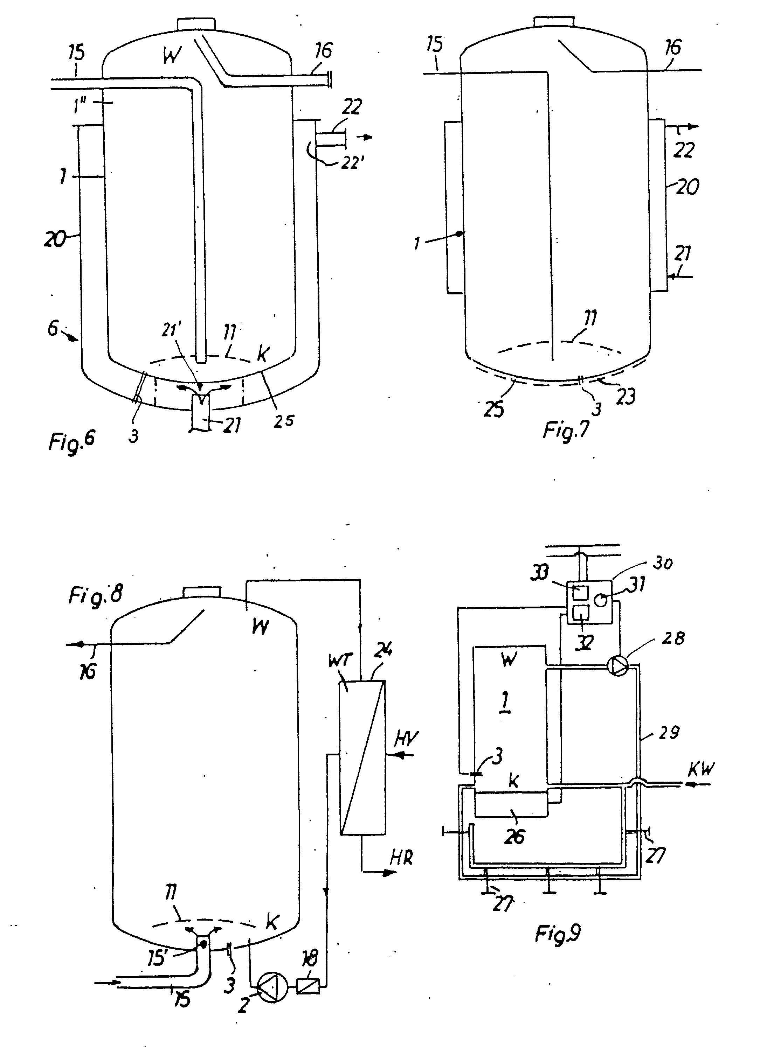

Beim Brauchwasserspeicher gemäß Fig. 6 handelt es sich um einen solchen mit Außenheizer 6, der aus einem den Behälter 1 mindestens zum Teil umfassenden Doppelmantel 20 mit Heizmediumsvor- und -rückläufen 21, 22 gebildet ist. Wesentlich ist hierbei, daß der Vorlauf 21 mit seiner Ausströmöffnung 21' im Bereich des Kaltwasserteiles K des Behälters 1 angeordnet ist, was bedeutet, daß hierbei die Aufwärmung des Kaltwasserteiles W nicht durch Zufuhr warmen Brauchwassers von oben bewirkt wird, sondern durch das gezielt dem Boden 25 des Behälters 1 zugeführten Heizmedium, das den Doppelmantel 20 durch den Rücklauf 22 verläßt, der mit seiner Abströmöffnung 22' oben am Doppelmantel 20 des Behälters 1 angeordnet ist. Die Außenheizerausbildung im Sinne der Fig. 6, d.h. , mit einem den Speicher ganz oder teilweise umfassenden Doppelmantel 20, kann natürlich bzgl. der Größe des Doppelmantels auf ein Minimum in der Weise reduziert sein, daß man diesen auf einen wesentlich kleineren Kasten, wie strichpunktiert in Fig. 6 angedeutet, reduziert, der dann mit dem Rücklaufanschluß 22 versehen ist. In diesem Falle muß dann natürlich mit einem anderen Wärmezufuhrelement (innen oder außen) für eine ausreichend Energiezufuhr gesorgt werden, wenn bei hohem Brauchwasser- und Wärmebedarf eine ausreichende Energiezufuhr erforderlich ist.

Beim Außenheizer 6 kann es sich auch um einen Elektroheizer 23 in Form einer entsprechend angepaßten Heizmatte handeln, wie dies in Fig. 7 schematisch angedeutet ist. Eine entsprechend umgetauschte Anordnung von Doppelmantel 20 und Elektroheizer 23 ist ebenfalls möglich oder auch die alleinige Anordnung einer Elektroheizmatte bekannter Art, wobei es aber wesentlich ist, daß mindestens ein Teil dieser Matte den Boden 25 des Behälters 1 abdeckt. Auch bei diesen Ausführungsformen können Aufströmblenden 11 vorgesehen werden.

Beim Brauchwasserspeicher gemäß Fig. 8, der auf Basis eines sogenannten Ladesystems arbeitet, das insbesondere für Fernwärmezuführung in Frage kommt, ist der Brauchwasserspeicher derart ausgebildet, daß zwischen dem Warmwasserteil W und dem Kaltwasserteil K des Behälters 1 eine mittels im Kaltwasserteil K angeordneten Thermofühlers 3 steuerbare Zirkulationspumpe 2 angeordnet ist, die druckseitig am Kaltwasserteil K und saugseitig am Warmwasserteil W angeschlossen ist. Zwischen der Zirkulationspumpe 2 und dem Behälter 1 befindet sich ein Wärmetauscher 24., der mit seinem Vor- und Rücklauf mit einem Fernheizsystem in Verbindung steht. Ebenfalls entsprechend gesteuert und geregelt wird hierbei das Warmwasser aus dem Warmwasserteil W via eingeschalteter Zirkulationspumpe 2 abgezogen, durch den Wärmetauscher 24 geleitet und unten wieder dem Behälter 1 solange zugeführt, bis sich das Temperaturniveau im Kaltwasserteil K ausreichend angehoben hat. Hierbei wird also bei derartigen Ladesystemen die per se vorhandene Ladepumpe als Zirkulationspumpe 2 für den periodischen, thermischen Desinfektionsvorgang mit ausgenutzt.

Wie aus Fig. 9 ersichtlich, besteht die Brauchwasserzirkulationsanlage, die für die Durchführung des zweiten Verfahrens bestimmt ist, aus einem Brauchwassererwärmer 26, bei dem es sich auch um einen Brauchwasserspeicher der vorbeschriebenen Art handeln kann, und aus einer zu den Zapfstellen 27 führenden, eine Zirkulationspumpe 28 enthaltenden Zirkulationsleitung 29. Wie ebenfalls ersichtlich, sind im Schaltkreis 30 der Zirkulationspumpe 28 ein einstellbares Zeitglied 31 und temperaturabhängig geregelte Schaltglied 32, 33 für die Pumpe 28 und den Brauchwassererwärmer 26 angeordnet. Um bei einer derartigen Anlage eine möglichst weitgehende Keimabtötung zu erreichen und einer Keimvermehrung entgegenzuwirken, wird durch entsprechende Einstellung des Zeitgliedes 31 in entsprechenden Zeitabständen die Zirkulationspumpe 28 in Gang gesetzt, die dann das gesamte Brauchwasser in der Zirkulationsleitung 29 und dem Brauchwassererwärmer 26 in Umlauf setzt, sobald im Kaltwasserbereich K das Temperaturniveau entsprechend angehoben ist, schaltet der dort befindliche Thermofühler über den Schaltkreis 30 die Zirkulationspumpe 28 wieder ab. Je nach Ausbildung des Brauchwassererwärmers 26 in der einen oder anderen vorbeschriebenen Form wird dabei der Kaltwasserbereich K, wie vorbeschrieben, "nachgewärmt".

## Ansprüche

1. Verfahren zur Verhinderung des Erhaltes und der Vermehrung von schädlichen Keimen eines in einem aufheizbaren System befindlichen Brauchwasservolumens, dem zwecks Anhebung der Temperatur geregelt und gesteuert Wärme zugeführt wird,
**dadurch gekennzeichnet,**
daß im untersten, temperaturniedrigsten Bereich des Brauchwasservolumens die Temperatur gemessen und in Abhängigkeit vom gemessenen keimgünstigen Temperaturwert zwecks Anhebung des Temperaturniveaus im Kaltwasserteil (K) des Systems aus dem temperaturhöheren Warmwasserteil (W) des Brauchwasservolumens selbst oder von außen Wärmeenergie bis zum Erreichen des keimwidrigen Temperaturniveaus dem Kaltwasserteil(K) zugeführt wird.

2. Brauchwasserspeicher zur Durchführung des Verfahrens nach Anspruch 1, bestehend aus einem Behälter (1) mit Innenheizer (5) und Kaltwasserzufuhr- und Warmwasserabfuhrrohren (15, 16), deren behälterseitige Öffnungen einerseits im Kaltwasserteil (K) und andererseits im Warmwasserteil (W) des Behälterinnenraumes (4) angeordnet sind,
**dadurch gekennzeichnet,**
daß am Behälter (1) außen eine Zirkulationspumpe (2) und am Saugstutzen (7) der Pumpe (2) ein mit seiner Einströmöffnung (12) im oberen Innenraum (4') endendes Leitungsstück (13) und am Druckstutzen (8) der Pumpe (2) ein mit seiner Ausströmöffnung (12') im mit einem die Pumpe (2) steuernden Thermofühler (3) versehen, unteren Innenraum (4") des Behälters (1) endendes Leitungsstück (14) angeordnet sind.

3. Brauchwasserspeicher nach Anspruch 2,
**dadurch gekennzeichnet,**
daß die Zirkulationspumpe (2) und die beiden Leitungsstücke (13, 14) am Öffnungsverschluß (10) einer Speicheröffnung (9) des Behälters (1) angeordnet sind.

4. Brauchwasserspeicher zur Durchführung des Verfahrens nach Anspruch 1, bestehend aus einem Behälter (1) mit Innenheizer (5), Kaltwasserzufuhr- und Warmwasserabfuhrrohren (15, 16), deren behälterseitige Öffnungen einerseits im Kaltwasserteil (K) und andererseits im Warmwasserteil (W) des Behälterinnenraumes (4) angeordnet sind,
**dadurch gekennzeichnet,**
daß zwischen den beiden Rohren (15, 16) ein Bypassleitung (17) mit Zirkulationspumpe (2) und druckseitiger Rückstromsperre (18) angeordnet sind, wobei die Pumpe (2) saugseitig am vom Warmwasserteil (W) des Behälters (1) abgehenden Bypassteil (17') angeordnet ist und daß das Kaltwasserzufuhrrohr (15) mit seiner Ausmündung (15') an der Tiefststelle (19) des im Kaltwasserteil (K) mit dem die Pumpe (2) steuernden Thermofühler (3) versehenen Behälters (1) angeordnet ist.

5. Brauchwasserspeicher nach Anspruch 4,
**dadurch gekennzeichnet,**
daß die Bypassleitung (17) außerhalb des Behälters (1) parallel zu dessen Längsachse (1') verlaufend angeordnet ist.

6. Brauchwasserspeicher nach Anspruch 4 oder 5,
mit horizontaler Anordnung der Behälterlängsachse (1'),
**dadurch gekennzeichnet,**
daß sich der im Tiefstbereich (19') des Behälters (1) angeordnete Kaltwasserzufuhrteil des Kaltwasserzufuhrrohres (15) über die ganze Länge des Tiefstbereiches (19') erstreckt und mit mehreren, über die ganze Länge verteilten Öffnungen (12) versehen ist, die gegen die Innenwand im Tiefstbereich des Behälters (1) gerichtet sind.

7. Brauchwasserspeicher zur Durchführung des Verfahrens nach Anspruch 1, bestehend aus einem Behälter (1) mit einem im Kaltwasserteil (K) ausmündenden Kaltwasserzufuhrrohr (15) und einem im Warmwasserteil (W) ausmündenden Warmwasserabfuhrrohr (16) und aus einem am Behälter (1) angeordneten Außenheizer (6),
**dadurch gekennzeichnet,**
daß bei Ausbildung des Außenheizers (6) in Form eines Doppelmantels (20) der Heizmediumsvorlauf (21) unter dem mit einem Thermofühler (3) versehenen Tiefstbereich (19') des Behälters (1) an dem diesen Bereich mit umschließenden Doppelmantel (20) und der Heizmediumsrücklauf (22) oben am Doppelmantel (20) angeordnet sind.

8. Brauchwasserspeicher nach Anspruch 7,
**dadurch gekennzeichnet,**
daß der Behälter (1) mit seinem Oberteil (1") aus dem Doppelmantel :(20) herausragend in diesem angeordnet ist und das Kaltwasserzu- und das Warmwasserabfuhrrohr (15, 16) am aus dem Doppelmantel (20) herausragenden Oberteil (1") des Behälters (1) angeordnet sind.

9. Brauchwasserspeicher zur Durchführung des Verfahrens nach Anspruch 1, bestehend aus einem Behälter (1) mit im Kaltwasserteil (K) ausmündendem Kaltwasserzufuhrrohr (15) und im Warmwasserteil (W) ausmündendem Warmwasserabfuhrrohr (16) und aus einem am Behälter (1) angeordneten Außenheizer (6),
**dadurch gekennzeichnet,**
daß bei Ausbildung des Außenheizers (6) in Form eines Elektroheizers (23), wie Heizmatte od.dgl., mindestens ein Teil des Elektroheizers (23) am Tiefstbereich (19') des mit in diesem Bereich mit einem den Außenheizer (6) steuernden Thermofühler (3) versehenen Behälters (1) angeordnet ist.

10. Brauchwasserspeicher zur Durchführung des Verfahrens nach Anspruch 1, bestehend aus einem Behälter (1 )mit im Kaltwasserteil (K) ausmündendem Kaltwasserzufuhrrohr (15), mit im Warmwasserteil (W) ausmündendem Warmwasserabfuhrrohr (16) und aus einem am Behälter (1) angeordneten Außenheizer (6),
**dadurch gekennzeichnet,**
daß der Außenheizer (6) des Behälters (1) aus einem Doppelmantel (20) mit Heizmediumsvor- und -rückläufen (21, 22) und aus einem Elektroheizer (23) gebildet ist, von denen das eine oder andere Außenheizerteil am mit den Außenheizer (6) steuernden Thermofühler (3) versehenen Kaltwasserteil (K) des Behälters (1) angeordnet ist, und daß bei Anordnung des Doppelmantels (20) am Kaltwasserteil (K) der Heizmediumsvorlauf (21) des Doppelmantels (20) auf die Tiefststelle (19) des Behälters (1) gerichtet ist.

11. Brauchwasserspeicher zur Durchführung des Verfahrens nach Anspruch 1, bestehend aus einem Behälter (1) mit Außenheizer (6) und mit im Kaltwasserteil (K) ausmündendem Kaltwasserzufuhrrohr (15) und im Warmwasserteil (W) ausmündendem Warmwasserabfuhrrohr (16),
**dadurch gekennzeichnet,**
daß zwischen dem Warmwasserteil (W) und dem Kaltwasserteil (K) des Behälters (1) eine mittels im Kaltwasserteil (K) angeordneten Thermofühler (3) steuerbare Zirkulationspumpe (2) angeordnet ist, die mit ihrem Leitungsstück (13) druckseitig am Kaltwasserteil (K) und mit der anderen Leitung saugseitig am Warmwasserteil (W) angeschlossen ist, wobei saugseitig zwischen Pumpe (2) und Behälter (1) ein Wärmetauscher (24) angeordnet ist.

12. Verfahren zur Verhinderung des Erhaltes und der Vermehrung von schädlichen Keimen eines in einem aufheizbaren System befindlichen Brauchwasservolumens, dem zwecks Anhebung der Temperatur geregelt und gesteuert Wärme zugeführt wird,

**dadurch gekennzeichnet,**

daß das im System befindliche Brauchwasservolumen in Abhängigkeit von vorgegebenen Zeitabständen kurzzeitig bis auf ein keimwidriges Temperaturniveau aufgeheizt und spätestens bei Erreichen dieses Temperaturniveaus mindestens einmal im System umgepumpt und bei Erreichen der keimwidrigen Temperatur im System thermostatgesteuert das Umpumpen beendet wird.

13. Brauchwasserzirkulationsanlage zur Durchführung des Verfahrens nach Anspruch 12 bestehend aus einem Brauchwassererwärmer, insbesondere Brauchwasserspeicher (1) mit zu Zapfstellen (27) führender, eine Zirkulationspumpe (28) enthaltender Zirkulationsleitung (29),

**dadurch gekennzeichnet,**

daß im Schaltkreis (30) der Zirkulationspumpe (28) ein einstellbares Zeitglied (31) und temperaturabhängig geregelte Schaltglieder (32, 33) für die Pumpe (28) und den an seiner Tiefststelle mit einem Pumpenabschaltthermostaten (3) versehenen Brauchwassererwärmer (26) angeordnet sind.

## Claims

1. A method for preventing the generation and multiplication of noxious germs in a process-water volume contained in a heatable system to which heat is supplied in a regulated and controlled manner for raising the temperature thereof,
characterized in that the temperature is measured in the lowest area of the process-water volume of the lowest temperature, and that in response to the measured temperature value favoring germ formation, for the purposes of raising the temperature level in the cold water portion (K) of the system, heat energy from the warm water portion (W) of higher temperature of the process-water volume is supplied herefrom or from the outside to the cold water portion (K) until the temperature level adverse to germ formation is reached.

2. A process-water reservoir for carrying out the process according to claim 1, comprising a container (1) exhibiting an internal heater (5) and cold water supply and hot water discharge tubes (15,16) the container-sided openings, on the one hand, are disposed in the cold water portion (K) and, on the other hand, are located in the hot water portion (W) of the container interior (4),
characterized in that provided externally on the container (1) is a circulation pump (2) and located on the in-take nozzle (7) of the pump (2) is a line section (13) terminating with the inflow opening (12) in the upper interior chamber (4') and located on the pressure nozzle (8) of the pump (2) is a line section (14) terminating with the out-flow opening (12') in the lower interior chamber (4") of the container (1) and being provided with a thermo-sensor (3) controlling the pump (2).

3. A process-water reservoir according to claim 2, characterized in that the circulation pump (2) and the two line sections (13,14) are disposed on the opening closure (10) of a reservoir opening (9) of the container (1).

4. A process-water reservoir for carrying into effect the method according to claim 1, comprising a container (1) exhibiting an internal heater (5), cold water supply and hot water discharge tubes (15,16) the container-sided openings of which, on the one hand, are disposed in the cold water portion (K) and, on the other hand, are located in the warm water portion (W) of the container interior (4),
characterized in that provided between the two tubes (15,16) is a bypass line (17) exhibiting a circulation pump (2) and a pressure-sided return-flow barrier (18), with the pump (2), at the intake side, being located on bypass portion (17') emerging from the warm water portion (W) of the container (1), and that the cold water supply tube (15) with the aperture (15') thereof is located at the lowest point (19) of the container (1) provided, in the cold water portion (K), with the thermo-sensor (3) controlling the pump (2).

5. A process-water reservoir according to claim 4, characterized in that the bypass line (17) is located externally of the container (1) and extends in a manner in parallel to the longitudinal axis (1') thereof.

6. A process-water reservoir according to claims 4 or 5, wherein the longitudinal axis (1') of the container is horizontally disposed,
characterized in that the cold water suppy portion of the cold water supply tube (15) disposed in the lowest area (19') of the container (1) extends throughout the length of the lowest area (19') and is provided with a plural number of openings (12) distributed throughout the length and directed toward the inner wall in the lowest area of the container (1).

7. A process-water reservoir for carrying out the method according to claim 1, comprising a container (1) including a cold water supply tube (15) terminating in the cold water portion (K), and a hot water discharge tube (16) terminating in the hot water portion (W), and an external heater (6) disposed on the container (1), characterized in that when configuring the external heater (6) in the form of a dual jacket (20), the heating medium forward flow (21) is located underneath the lowest area (19') of the container (1) provided with a thermo-sensor (3) on the dual jacket (20) enclosing the said area, while the heating medium return flow (22) is disposed at the top of the dual jacket (20).

8. A process-water reservoir according to claim 7, characterized in that the container (1), with the upper portion (1") thereof, protrudes from the dual jacket (20) and is disposed therein, and that the cold water supply and hot water discharge tubes (15,16) are located on the upper portion (1") of the container (1) protruding from the dual jacket (20).

9. A process-water reservoir for carrying into effect the method according to claim 1, comprising a container (1) exhibiting a cold water supply tube (15) terminating in the cold water portion (K), and a hot water discharge tube (16) terminating in the hot water portion (W), and an external heater (6) disposed on the container (1), characterized in that, when configuring the external heater (6) in the form of an electrical heater (23), such as a heating mat or the like, at least a part of the electrical heater (23) is located in the lowest area (19') of the container (1) provided in that area with a thermosensor (3) controlling the external heater (6).

10. A process-water reservoir for carrying into effect the method according to claim 1, comprising a container (1) exhibiting a cold water supply tube (15) terminating in the cold water portion (K), a hot water discharge tube (16) terminating in the hot water portion (W), and an external heater (6) disposed on the container (1), characterized in that the external heater (6) of the container (1) is formed of a dual jacket (20) comprising heating medium forward and returns flows (21,22) and an electrical heater (23), with one or the other of said external heater portions being located on the cold water portion (K) of the container (1) provided with thermosensor (3) controlling the external heater (6), and that, when arranging the dual jacket (20) on the cold water portion (K), the heating medium forward flow (2) of the dual jacket (20) is directed toward the lowest point (19) of the container (1).

11. A process-water reservoir for carring into effect the method according to claim 1, comprising a container (1) including an external heater (6) and a cold water supply tube (15) terminating in the cold water portion (K) and a hot water discharge tube (16) terminating in the hot water portion (15), characterized in that disposed between the hot water portion (W) and the cold water portion (K) of the container (1) is a circulation pump (2) controllable by means of a thermo-sensor (3) provided in the cold water portion, (K), wherein the circulation pump with the line section (13) thereof, on the pressure side, is connected to the cold water portion (K), and with the other line, at the intake side, is connected to the hot water portion (W), with a heat exchanger (24), on the intake side, being located between pump (2) and container (1).

12. A method for preveing the generation and multiplication of noxious germs of a process-water volume contained in a heatable system to which heat is supplied in regulated and controlled manner for the purpose of raising the temperature, characterized in that the process-water volume cotnained in the system, in response to predetermined time intervals, temporarily, is heated to a temperarature level adverse to germ formation, and when reaching the said temperature level, at the latest, is at least once repumped in the system, with repumping in the system being terminated by thermostatcontrol, once the temperature adverse to germ formation is reached.

13. A process-water circulation system for carrying into effect the method according to claim 12, comprising a process-water heater, in particular, a process-water reservoir (1) including a ciruclation line (29) leading to filling stations (27) and containing a circulation pump (28), characterized in that disposed in the circuit (30) of the circulation pump (28) are an adjustable timer (31) and switching elements (32,33) controlled in response to temperature, for the pump (28) and the process-water heater (26) provided at the lowest point and furnished with a thermostat (3) to switch off the pump.

## Revendications

1. Procédé destiné à empêcher la subsistance et la prolifération de germes nocifs d'un volume d'eau sanitaire se trouvant dans un système chauffant et auquel on transmet de la chaleur de manière régulée et contrôlée en vue d'élever la température, caractérisé en ce que l'on mesure la température dans la partie inférieure du volume d'eau, de température la plus basse, et en ce que, en fonction de la valeur de température mesurée, favorable aux germes, on amène à la partie eau froide (K), en vue d'élever le niveau de température dans la partie eau froide (K) du système, de l'énergie calorifique de la partie eau chaude (W) de température la plus élevée du volume d'eau sanitaire lui-même ou de l'extérieur, jusqu'à atteindre le niveau de température néfaste aux germes.

2. Accumulateur d'eau sanitaire pour la mise en oeuvre du procédé selon la revendication 1, constitué d'un réservoir (1) comportant un élément de chauffe intérieur (5) ainsi que des conduites d'amenée d'eau froide et d'évacuation d'eau chaude (15,16) dont les ouvertures côté réservoir, sont situées d'une part dans la partie eau froide (K) et d'autre part dans la partie eau chaude (W) de l'espace intérieur (4) du réservoir, caractérisé en ce qu'une pompe de circulation (2) est agencée à l'extérieur du réservoir (1), en ce qu'un tronçon de conduite (13) débouchant dans l'espace intérieur supérieur (4') avec son ouverture d'entrée (12), est relié au raccord d'aspiration (7) de la pompe (2), et en ce qu'un tronçon de conduite (14) débouchant, avec son ouverture de sortie (12'), dans l'espace intérieur inférieur (4") équipé d'une sonde thermique (3) qui commande la pompe (2), est relié au raccord de refoulement (8) de la pompe (2).

3. Accumulateur d'eau sanitaire selon la revendication 2, caractérisé en ce que la pompe de circulation (2) et les deux tronçons de conduite (13,14) sont disposés sur l'élément de fermeture (10) d'une ouverture d'accumulateur (9) du réservoir (1).

4. Accumulateur d'eau sanitaire pour la mise en oeuvre du procédé selon la revendication 1, constitué d'un réservoir (1) comportant un élément de chauffe intérieur (5) ainsi que des conduites d'amenée d'eau froide et d'évacuation d'eau chaude (15,16) dont les ouvertures côté réservoir, sont situées d'une part dans la partie eau froide (K) et d'autre part dans la partie eau chaude (W) de l'espace intérieur (4) du réservoir, caractérisé en ce qu'entre les deux conduites (15,16) est agencée une conduite de liaison (17) avec pompe de circulation (2) et un dispositif anti-retour (18) côté refoulement, la pompe (2) étant reliée, côté aspiration, au tronçon de conduite de liaison (17') partant de la partie eau chaude (W) du réservoir (1), et en ce que la conduite d'amenée d'eau froide (15) est disposée, avec son ouverture de sortie (15'), au point le plus bas (19) du réservoir (1) équipé, dans la partie eau froide (K), d'une sonde thermique (3) qui commande la pompe (2).

5. Accumulateur d'eau sanitaire selon la revendication 4, caractérisé en ce que la conduite de liaison (17) est disposée à l'extérieur du réservoir (1) en s'étendant parallèlement à l'axe longitudinal (1') du réservoir.

6. Accumulateur d'eau sanitaire selon la revendication 4 ou 5, l'axe longitudinal (1') du réservoir étant disposé horizontalement, caractérisé en ce que la partie d'alimentation en eau froide de la conduite d'amenée d'eau froide (15) disposée dans la partie la plus basse (19') du réservoir (1), s'étend sur toute la longueur de la partie la plus basse (19'), et est pourvue de plusieurs ouvertures (12) réparties sur toute la longueur et dirigées vers la paroi interne, dans la partie la plus basse du réservoir (1).

7. Accumulateur d'eau sanitaire pour la mise en oeuvre du procédé selon la revendication 1, constitué d'un réservoir (1) comportant une conduite d'amenée d'eau froide (15) débouchant dans la partie eau froide (K) et une conduite d'évacuation d'eau chaude (16) débouchant dans la partie eau chaude (W), et comportant également un élément de chauffe extérieur (6) agencé contre le réservoir (1), caractérisé en ce que pour une réalisation de l'élément de chauffe extérieur (6) sous la forme d'une enveloppe double (20), la conduite d'alimentation en fluide chauffant (21) est disposée endessous de la partie la plus basse (19') du réservoir (1) pourvue d'une sonde thermique (3), sur l'enveloppe double (20) entourant cette partie basse, la conduite de retour du fluide chauffant (22) étant disposée en partie haute de l'enveloppe double (20).

8. Accumulateur d'eau sanitaire selon la revendication 7, caractérisé en ce que le réservoir (1) est logé dans l'enveloppe double (20) avec sa partie supérieure (1") sortant de l'enveloppe, et en ce que les conduites d'amenée d'eau froide et d'évacuation d'eau chaude (15,16) sont disposées sur la partie supérieure (1") du réservoir (1) sortant de l'enveloppe double (20).

9. Accumulateur d'eau sanitaire pour la mise en oeuvre du procédé selon la revendication 1, constitué d'un réservoir (1) comportant une conduite d'amenée d'eau froide (15) débouchant dans la partie eau froide (K) et une conduite d'évacuation d'eau chaude (16) débouchant dans la partie eau chaude (W), et comportant également un élément de chauffe extérieur (6) agencé contre le réservoir (1), caractérisé en ce que pour une réalisation de l'élément de chauffe extérieur (6) sous la forme d'un élément chauffant électrique (23), tel qu'une nappe chauffante ou élément similaire, au moins une partie de l'élément chauffant électrique (23) est disposée sur la partie la plus basse (19') du réservoir (1) équipé dans cette partie d'une sonde thermique (3) qui commande l'élément de chauffe extérieur (6).

10. Accumulateur d'eau sanitaire pour la mise en oeuvre du procédé selon la revendication 1, constitué d'un réservoir (1) comportant une conduite d'amenée d'eau froide (15) débouchant dans la partie eau froide (K) et une conduite d'évacuation d'eau chaude (16) débouchant dans la partie eau chaude (W), et comportant également un élément de chauffe extérieur (6) agencé contre le réservoir (1), caractérisé en ce que l'élément de chauffe extérieur (6) du réservoir (1) est constitué par une enveloppe double (20) avec des conduites d'alimentation et de retour de fluide chauffant (21,22) et d'un élément chauffant électrique (23), dont l'une ou l'autre des parties d'élément de chauffe extérieur est disposée sur la partie eau froide (K) du réservoir (1) équipée d'une sonde thermique qui commande l'élément de chauffe extérieur (6), et en ce que dans le cas d'un agencement de l'enveloppe double (20) au niveau de la partie eau froide (K), l'alimentation en fluide chauffant (21) de l'enveloppe double (20) est dirigée sur la partie la plus basse (19) du réservoir (1).

11. Accumulateur d'eau sanitaire pour la mise en oeuvre du procédé selon la revendication 1, constitué d'un réservoir (1) comportant un élément de chauffe extérieur (6) ainsi qu'une conduite d'amenée d'eau froide (15) débouchant dans la partie eau froide (K) et une conduite d'évacuation d'eau chaude (16) débouchant dans la partie eau chaude (W), caractérisé en ce qu'entre la partie eau chaude (W) et la partie eau froide (K) du réservoir (1) est disposée une pompe de circulation (2) qui peut être commandée par une sonde thermique (3) agencée dans la partie eau froide (K), et qui est reliée, côté refoulement, au moyen de son tronçon de conduite (13), à la partie eau froide (K), et par l'autre conduite, côté aspiration, à la partie eau chaude (W), un échangeur de chaleur (24) étant disposé, côté aspiration, entre la pompe (2) et le réservoir (1).

12. Procédé destiné à empêcher la subsistance et la prolifération de germes nocifs d'un volume d'eau sanitaire se trouvant dans un système chauffant et auquel on transmet de la chaleur de manière régulée et contrôlée en vue d'élever la température, caractérisé en ce que le volume d'eau sanitaire se trouvant dans le système est réchauffé temporairement, en fonction d'intervalles de temps prédéfinis, à une température néfaste aux germes, et est mis en circulation au moins une fois dans le système, par pompage, au plus tard lorsque ce niveau de température a été atteint, la mise en circulation par pompage étant interrompue par une commande par thermostat, lorsque l'on a atteint la température néfaste aux germes dans le système.

13. Installation de mise en circulation d'eau sanitaire destinée à la mise en oeuvre du procédé selon la revendication 12, composée d'un réchauffeur d'eau sanitaire, notamment un accumulateur d'eau sanitaire (1) comportant une conduite de circulation (29) conduisant à des points de soutirage (27) et comportant une pompe de circulation (28), caractérisée en ce que dans le circuit de commande (30) de la pompe de circulation (28) sont agencés une horloge réglable (31) et des organes de commande (32,33) réglés en fonction de la température pour la pompe (28) et le réchauffeur d'eau sanitaire (26) équipé dans sa partie la plus basse, d'un thermostat (3) de mise à l'arrêt de la pompe.

Fig.1

Fig.2

Fig.3

Fig.4

Fig.5

EP 0 270 993 B1

Fig.6

Fig.7

Fig.8

Fig.9